# EUROPÄISCHE PATENTSCHRIFT

(11) **EP 0 564 830 B1**
(45) Veröffentlichungstag und Bekanntmachung des Hinweises auf die Patenterteilung: **11.10.1995**
(21) Anmeldenummer: 93103719.6
(22) Anmeldetag: 09.03.1993
(51) Int. Cl.: B01J 35/04, B01J 37/02, B01J 37/00, B01J 35/02

(54) **Monolithischer Trägerkatalysator, Verfahren zu seiner Herstellung und seine Verwendung**
Monolithic supported catalyst, process for its preparation and its use
Catalyseur monolitique sur support, procédé pour sa préparation et son utilisation

(30) Priorität: 25.03.1992 DE 4209631
(43) Veröffentlichungstag der Anmeldung: 13.10.1993
(73) Patentinhaber: BASF Aktiengesellschaft, 67063 Ludwigshafen (DE)
(72) Erfinder: Broecker, Josef Franz, Dr., W-6700 Ludwigshafen (DE); Stroezel, Manfred, W-6804 Ilvesheim (DE); Arnold, Lothar, Dr., W-6900 Heidelberg (DE); Horn, Hans Christoph, Dr., W-6715 Lambsheim (DE); Bittler, Knut, Dr., W-6720 Speyer (DE)

(56) Entgegenhaltungen:
- EP-A- 0 348 575
- EP-A- 0 362 448
- DE-A- 3 826 155
- GB-A- 2 094 170

## Beschreibung

Die Erfindung betrifft ein Verfahren zur Herstellung eines monolithischen Trägerkatalysators aus metallischem Trägermaterial und dessen Verwendung.

Nach dem Stand der Technik sind eine Vielzahl von monolithischen Trägerkatalysatoren bekannt, die für die unterschiedlichsten Flüssigphasenreaktionen eingesetzt werden.

So beschreibt die CH-547 120, der Fa. Gebr. Sulzer AG eine monolithische Mischeinrichtung zur Durchführung chemischer Reaktionen, bei der es möglich ist, die die Strömungskanäle bildenden Schichten entweder selbst aus einem Katalysatormaterial herzustellen, bzw. auf die Schichten, die vorzugsweise aus einem undurchbrochenen Material, beispielsweise aus Blech oder gegebenenfalls auch aus einem Metallgewebe oder -gewirk bestehen können, ein Katalysatormaterial aufzubringen. Eine Angabe über das Katalysatormaterial bzw. dessen Herstellung wird hierbei nicht gemacht.

Die EP 0 201 614 der gleichen Firma beansprucht einen Reaktor zum Durchführen von heterogenen, katalytischen Reaktionen, mit mindestens einem einen Katalysator aufweisenden Packungselement, das aus parallel zur Hauptströmungsachse des Reaktors angeordneten, gewellten Platten besteht, deren Wellung schräg zur Hauptströmungsachse geneigt und bei benachbarten Platten entgegengesetzt gerichtet ist, dadurch gekennzeichnet, daß zwischen benachbarten Platten mindestens ein bandförmiger, teilweise gewellter Katalysatorkörper entfernbar eingebaut ist.

Man erkennt an dieser Druckschrift, wie schwierig es ist, solche Mischelemente mit einer geeigneten katalytischen Schicht zu versehen. Es ist deshalb notwendig, solche Umwege zu gehen und getrennte Katalysatorelemente einzubauen.

Die EP 0 068 862 der Atomic Energy of Canada mit dem Titel: "An ordered bed packing module" beschreibt einen Packungsmodul für einen im geordneten Bett vorliegenden Katalysator für Gas-Flüssigkeits-Transferreaktionen, umfassend alternierende Lagen von ebenen und gewellten Bahnen, die zu einer Rolle aufgewickelt sind, wobei die Wellungen sich längs einer Achse erstrecken, um die die Schichten gemeinsam gewickelt sind und unbehinderte Fluiddurchlässe zwischen den ebenen und den gewellten Bahnen bilden, dadurch gekennzeichnet, daß die ebenen Bahnen gewelltes oder gefilztes Tuch eines textilen dochtartigen Materials umfassen, das hydrophil bezüglich der Flüssigkeit der Gas-Flüssigkeits-Transferreaktion ist und einen ununterbrochenen Dochtpfad zwischen den Enden der Rolle für die genannte Flüssigkeit bildet und die gewellte Bahn ein offenmaschiges Material umfaßt mit zumindest einer äußeren Oberflächenschicht, die aus einer organischen, polymeren Substanz hohen Molekulargewichts besteht, die inhärent hydrophob bezüglich der genannten Flüssigkeit ist und Katalysatorkristallite (Gruppe VIII des Periodensystems) enthält, wobei die Kristallite in der porösen Matrix dispergiert sind und teilweise dabei umschlossen sind.

Als Beispiel wird als organische Polymersubstanz Polytetrafluorethylen angeführt, in dem Pt-Kristallite auf Kohlenstoffpartikeln enthalten sind, die in der porösen Matrix dispergiert sind. Diese katalytisch aktiven Pt/C-Teilchen werden in Form einer wäßrigen Suspension von Pt/C-Pulver auf die hydrophobe Polymermasse aufgebracht und durch Trocknen bei 60°C bis 200°C und anschließendes Sintern bei 365°C fixiert.

Die angeführten Druckschriften zeigen, wie schwierig es ist, monolithische Mischelemente nachträglich mit katalytisch aktiven Schichten zu versehen.

So lassen sich die von der Fa. Sulzer angegebenen monolithischen Katapak-Produkte durch Tränken mit Salzlösungen der Aktivkomponenten in aktive Katalysatoren überführen. Dazu muß man jedoch die umständlichen und häufig wenig reproduzierbaren Tränkschritte mit anschließenden Trocknungs- und Calcinationsschritten durchführen. Da man aber normalerweise zur Oberflächenvergrößerung zunächst einen "wash-coat" aufbringt, leidet bei dieser Trägerfertigung mit anschließenden Tränkschritten für die Aktivkomponenten die Haftfestigkeit. Man erhält Katalysatoren, die denen der Autoabgaskatalysatoren sehr ähnlich sind. Bei letzteren ist die schlechte Haftfestigkeit bekannt, die bei mechanischer Beanspruchung leicht zur Zerstörung des Katalysators führt.

Bei Flüssigphasenreaktionen in kontinuierlichen Verfahren ist die Abriebbeständigkeit eine wesentliche Voraussetzung für einen störungsfreien Betrieb der Anlage.

Es stellte sich daher die Aufgabe, einen Katalysator in Form einer monolithischen Einheit zu entwickeln, bei dem die beschriebenen Nachteile nicht auftreten.

Diese Aufgabe wird erfindungsgemäß dadurch gelöst, daß das Trägermaterial in Form eines Metallgewebes oder einer Metallfolie nacheinander an der Luft erhitzt, abgekühlt und im Vakuum mit Aktivkomponenten und Promotoren beschichtet wird, anschließend das beschichtete Trägermaterial geschnitten, verformt und letztendlich zu einem monolithischen Katalysatorelement verarbeitet wird.

Als eine Variante ist es möglich, daß nach dem Beschichten des Trägermaterials zur Formierung desselben nachgetempert wird.

Das erfindungsgemäß monolitische Katalysatorelement wird insbesondere für chemische Umsetzungen in der Gas- und Flüssigphase eingesetzt.

Es ist bekannt, haftfeste Schichten mittels Vakuumbeschichtungstechniken herzustellen.

Solche Beschichtungen werden heute in der Elektroindustrie dem Werkzeug- und Maschinenbau sowie der Optikindustrie in vielfältiger Weise benutzt.

Es wurde nun gefunden, daß man monolithische Trägerkatalysatoren durch Aufdampfen bzw. Aufsputtern von Aktivkomponenten und Promotoren auf metallische folien- bzw. gewebeartige Träger herstellen kann.

Metallische Trägermaterialien in Form von Metallfolien oder Metallgeweben wie beispielsweise Edelstähle mit Werkstoffnummern 1.4767, 1.4401, 2.4610, 1.4765, 1.4847, 1.4301, etc. eignen sich besonders gut, da sie vor der Beschichtung mit Aktivkomponenten durch eine Temperung eine Aufrauhung ihrer Oberfläche erhalten können. Dazu werden die metallischen Träger bei Temperaturen von 600 bis 1100, vorzugsweise 800 bis 1000°C ein bis 20, vorzugsweise 1 bis 10 Stunden an der Luft erhitzt und wieder abgekühlt. Diese Vorbehandlung ist für die Aktivität des Katalysators entscheidend. Nach dieser Trägerbehandlung bei erhöhter Temperatur wird mit der Aktivkomponente beschichtet. Dazu wird der Träger im Vakuum bei einem Druck von 10⁻³ bis 10⁻⁸ mbar mittels einer Verdampfungseinrichtung, z.B. Elektronenstrahlverdampfung oder Sputtervorrichtung mit den Aktivkomponenten und Promotoren gleichzeitig oder nacheinander in diskontinuierlicher oder kontinuierlicher Fahrweise beschichtet. Zur Formierung des Katalysators kann eine Temperung unter Inertgas oder Luft nachgeschaltet werden.

Im Gegensatz zu den bisherigen Anwendungen der Aufdampftechnik in der Optik- und Elektroindustrie, bei denen man hohe Reinheit der Träger- und Aufdampfmaterialien, eine bestimmte Kondensationstemperatur am Träger und eine bestimmte Aufdampfrate einstellen muß, da Fehlstellen in Aufdampffilmen die optischen, elektrischen und magnetischen Eigenschaften stark beeinflussen und hierfür ein erheblicher Aufwand zur reproduzierbaren Herstellung solcher Filme erforderlich ist, geht es bei dem erfindungsgemäßen Verfahren zur Herstellung von Katalysatorschichten darum, möglichst ungeordnete und gestörte polykristalline Schichten bzw. Cluster herzustellen. Deshalb sind normalerweise keine besonders guten Vakuumbedingungen erforderlich. Ferner kann man durch wechselweises Aufdampfen von Aktivkomponenten und strukturellen Promotoren die Aktivkomponenten sehr feinkristallin bzw. clusterförmig erzeugen.

Man kann bei dem erfindungsgemäßen Verfahren den Katalysator systematisch aufbauen, beispielsweise in einer Bedampfungsanlage mit mehreren verschiedenen Verdampfungsquellen. So läßt sich beispielsweise zunächst eine Oxidschicht oder durch reaktives Verdampfen eine Haftschicht auf den Träger aufbringen. Auf diese Grundschicht lassen sich Aktivkomponenten und Promotoren in mehreren Wechselschichten herstellen. Durch Einlaß eines reaktiven Gases in den Rezipienten können Promotorschichten aus Oxiden oder anderen Verbindungen erzeugt werden. Auch Tempervorgänge können zwischengeschaltet werden.

Durch die erfindungsgemäße Herstellung des Katalysatorgewebes bzw. der Katalysatorfolien besitzen die Aktivkomponenten eine so gute Haftfestigkeit, daß man sie nun schneiden, verformen und zu monolithischen Katalysatorelementen verarbeiten kann.

Einen sehr einfachen monolithischen Katalysator erhält man, wenn man das Katalysatorgewebe bzw. die Katalysatorfolie mittels einer Zahnradwalze verformt und glattes und gewelltes Gewebe bzw. Folie zusammenrollt zu einem zylinderförmigen Monolithen mit gleichartigen senkrechten Kanälen. Es lassen sich aber auch beliebige statische Mischer aus diesem Katalysatormaterial formen, da die Haftfestigkeit der Katalysatorschicht ausreichend hoch ist.

Die so erzeugten monolithischen Katalysatorelemente in Form von Mischelementen werden in einen Reaktor eingebaut und mit der umzusetzenden Reaktionsflüssigkeit beaufschlagt. Bei Hydrierreaktionen wird Wasserstoff bzw. Wasserstoff und Inertgas zugesetzt und mittels der Form der Monolithe eine optimale Gas-Flüssigkeitsdurchmischung erreicht. Man kann die unterschiedlichsten chemischen Reaktionen an solchen Katalysatoren durchführen.

Für Hydrierreaktion werden beispielsweise Katalysatoren eingesetzt, die als Aktivkomponenten Elemente der 8. Gruppe des Periodensystems wie beispielsweise Fe, Co, Ni, Ru, Rh, Pd, Pt und Ir enthalten. Als Promotoren können unter anderem Cu, Ag, Au, Zn, Sn, Bi, Sb etc. dienen.

Mit Pd-Katalysatoren nach dem erfindungsgemäßen Verfahren lassen sich so olefinische Doppelbindungen selektiv hydrieren.

Ein entsprechender Pd-Katalysator wird folgendermaßen hergestellt:
Edelstahlgewebe mit der Werkstoffnummer 1.4767 aus Fe, Cr und Al wird in einem Ultraschallbad von anhaftendem Öl und Fett gereinigt und 5 Stunden bei 900°C in einer Muffel an der Luft erhitzt. Nach dem Erkalten wird das Gewebe in einer kontinuierlich arbeitenden Elektronenstrahlbedampfungsanlage beidseitig mit einer 4 nm dicken Pd-Schicht bedampft (Schichtdicke mit Schwingquarz gemessen). Das so erhaltene Katalysatorgewebe wird teilweise mittels einer Zahnradwalze verformt und danach das gewellte Gewebestück mit einem glatten Gewebestück zusammengerollt. Der so erhaltene zylinderförmige monolithische Katalysator mit dem gleichen Durchmesser wie der Hydrierreaktor wird in letzteren eingebaut und mit der Hydrierlösung und Wasserstoff beaufschlagt. Bei einer Querschnittsbelastung von 20 m³/m² x h erhält man eine optimale Verteilung von Gas und Flüssigkeit sowie einen exzellenten Austausch mit der Katalysatorgrenzfläche, was sich in einer hohen Raumzeitausbeute zu erkennen gibt.

## Patentansprüche

1. Verfahren zur Herstellung eines monolithischen Trägerkatalysators aus metallischem Trägermaterial, dadurch gekennzeichnet, daß das Trägermaterial in Form eines Metallgewebes oder einer Metallfolie nacheinander an der Luft erhitzt, abgekühlt und im Vakuum mit Aktivkomponenten und Promotoren beschichtet wird, anschließend das beschichtete Trägermaterial geschnitten, verformt und letztendlich zu einem monolithischen Katalysatorelement verarbeitet wird.

2. Verfahren nach Anspruch 1, dadurch gekennzeichnet, daß nach dem Beschichten des Trägermaterials zur Formierung desselben nachgetempert wird.

3. Verfahren nach den Ansprüchen 1 und 2, dadurch gekennzeichnet, daß das monolithische Katalysatorelement für chemische Umsetzungen in der Gas- und Flüssigphase eingesetzt wird.

## Claims

1. A process for the preparation of a monolithic supported catalyst from a metallic support material, wherein the support material, in the form of a woven metal fabric or metal foil, is successively heated in air, cooled and coated under reduced pressure with active components and promoters, and the coated support material is subsequently cut, shaped and finally converted into a monolithic catalyst element.

2. A process as claimed in claim 1, wherein the coated support material is activated by re-heating.

3. A process as claimed in claim 1 or 2, wherein the monolithic catalyst element is employed for chemical reactions in the gas or liquid phase.

## Revendications

1. Procédé de fabrication d'un catalyseur à support, monolithique, caractérisé en ce que l'on chauffe le matériau de support sous forme d'un tissu de métal ou d'une feuille de métal l'un après l'autre à l'air, on le refroidit et on le revêt, sous vide, de composants actifs et de promoteurs, puis on coupe le matériau de support revêtu, on le façonne et on le transforme finalement en un élément de catalyseur monolithique.

2. Procédé suivant la revendication 1, caractérisé en ce que, après le revêtement, on soumet le matériau de support à un posttraitement thermique en vue de sa mise en forme ou de son façonnage.

3. Procédé suivant les revendications 1 et 2, caractérisé en ce que l'on utilise l'élément de catalyseur monolithique pour des réactions chimiques en phases gazeuses et liquides.
